# EUROPEAN PATENT APPLICATION

(11) **EP 1 837 133 A1**
(43) Date of publication of application: **26.09.2007**
(21) Application number: 06111413.8
(22) Date of filing: 20.03.2006
(51) Int. Cl.: B25J 9/16, G05B 19/418

(54) **An industrial production arrangement and a method for production**

(71) Applicant: ABB AB, 721 83 Västerås (SE)
(72) Inventor: Lemarinier, Pavel, 723 45 Västerås (SE); Poljén, Christian, 745 93 Enköping (SE); Olofsson, Åke, 723 48 Västerås (SE); Sundstedt, Lennart, 723 49 Västerås (SE); Sköld, Susanne, 722 23 Västerås (SE); Johansson, Torbjörn B., 722 46 Västerås (SE); Selnes, Tony, 722 31 Västerås (SE)
(74) Representative: Reyier, Ann-Mari

(57) **Abstract**

The invention relates to an industrial production arrangement (1) comprising at least a first machine (5) adapted to utilize a first tool (7), and a second machine (11) also adapted to utilize a tool, each machine being adapted to be automatically controlled by a control system, wherein the first machine is adapted to release the first tool (7), and the second machine is adapted to seize the first tool and to utilize the first tool. The invention also relates to a control device (19, 29), a method for controlling two machines, a computer program (37), and a computer readable medium (35).

## Description

### TECHNICAL FIELD

The present invention relates to an industrial production arrangement and a method for production. The invention also relates to a control device, a computer program, and a computer readable medium.

### PRIOR ART

An industrial robot is usually provided with a manipulator having three or eight axes, and which is adapted to move a tool in order to perform work operations, and a control device adapted to control the movement of the manipulator and the tool. Experiments and tests have been carried out in which two such industrial robots have been sharing the same tool. In the experiments a first robot utilized the tool during a first period of time and then released the tool, after what the second robot seized the tool and utilized the tool during a second period of time. Thus the two robots shared the same tool, by utilizing the tool at different times.

When sharing a tool between two robots, as in these experiments and test runs, a number of problems are encountered. A first problem is that both robots have to be carefully programmed so that the robots do not try to work with the same tool at the same time. Even if such programming is possible, errors may occur for either of the robots, resulting in downtime of production since correcting the errors takes time and will impair the schedule of the robots. A second problem is that, since the tool itself needs to be controlled and since the tool is used by two robots, two control systems for controlling the tool are needed, one tool control system for each robot. A third problem is that the tool usually needs some kind of service and/or a sleep period in order to function properly. When two industrial robots uses the same tool it is usually not possible by default to keep track of when it is time for service and when there is time for a sleeping period, and thus the quality of the tool may deteriorate or the tool may become impossible to use all together.

These and other drawbacks have led to that the concept of letting two robots share the same tool has not been widely used in practical applications. Thus, in practical industrial robot systems, each robot will have its own set of tools, for example, a drilling robot will use its own set of drilling tools with different diameters.

### SUMMARY OF THE INVENTION

One object of the present invention is to improve the industrial process of producing a product.

According to a first aspect of the invention this object is achieved with the industrial production arrangement according to claim 1, in which the control system is adapted to control both the first and the second machines and to coordinate the machines. According to a second aspect of the invention this object is achieved with a control device according to claim 19, according to a third aspect the object is achieved with a emthod according to claim 20, according to a fourth aspect the object is achieved with a computer program according to claim 21, and according to a fifth aspect the object is achieved with a computer readable medium according to claim 22.

By controlling the machines with the same control system instead of with two independent control systems, the problems of the prior art when using tool sharing are decreased to such a degree that it now becomes advantageous to use tool sharing in practical applications. For example, since the robots are controlled by the same control system, the movement of one of the robots may be adapted to any possible errors occurring for any of the other robots.

By taking advantage of the possibility of sharing tools between two or more industrial machines, the flexibility of the production arrangement increases. For example, the programmer may more readily adapt the production arrangement for different products. Furthermore, there is more flexibility when designing the production, since the order of performing work processes may be decided more freely with less concern about which machine wields which tool.

Another advantage is that the investment cost for the production arrangement can be decreased, since it is no longer needed to invest in a full set of tools for all machines. Rather it is only necessary to invest in perhaps one set of tools, wherein the machines may share the one set of tools with each other. In some circumstances the actual number of machines may also be reduced.

Preferably the second machine is also adapted to release the second tool and to use the first tool instead of the second tool, when changing tools. In this way the second tool becomes free for use by another machine. Furthermore, the second tool will not obstruct the functioning of the first tool during its use. After finishing utilizing the first tool the second machine is preferably adapted to release the first tool and to once again seize the second or another tool. Preferably the first machine is adapted to seize the second or another tool, after the first machine has released the first tool. Hence the first and the second machines have interchanged the tools with each other. There may of course be several tools available for the machines, meaning that both machines may use any tool from a set of several tools. Furthermore, there may be more than two machines involved in the tool sharing, and the tool sharing steps described need not be performed simultaneously.

The industrial production arrangement is arranged for performing work operations on a product. It is not necessary that the arrangement completes the product, but may rather be a small part of a larger production system. Preferably, the machines each comprise at least one mechanical member, which is movable and which is adapted to move and wield the tool. Preferably the mechanical member is movable with at least three degrees of freedom, preferably at least four degrees of freedom and most preferably six to eight degrees of freedom. Thus the releasing and seizing of tools at different locations is facilitated. Preferably at least the second machine is an industrial robot comprising a manipulator, and most preferably both machines are industrial robots.

The tool may be any type of tool suitable for use by a machine, preferably by an industrial robot. Preferably the tool is easily releasable and siezable by the machines. For example the tool may be a drilling tool, a cutting tool, a welding tool, a gluing tool, a gripping tool, a grinding tool, a pressing tool, or any other type of tool useable in the machines. Preferably a control system is adapted to control the machines to release and seize the tools automatically. Thus no operator needs to change the tools by hand, or needs to monitor the change.

In one embodiment of the invention the control system comprises a first control device adapted to control both the first and the second machines. Since a single control device controls the first and the second machines, it is not necessary to transmit data or information between two ore more control devices adapted to control different machines. Thus there is no need for a master/slave arrangement between the machines, which increases the reliability and flexibility of the production arrangement. It is not necessarily so that the first control device is the only control device. In fact, it is common that the control system comprises several units performing different control functions. It is important however that at least one control device controls and coordinates both the first and the second machine, preferably in an overarching manner.

According to one embodiment the control system comprises a first tool control module adapted to control the operation of the first tool both when the first tool is utilized by the first machine and when the first tool is utilized by the second machine. Thus the tool is controlled by the same control device regardless of the machine in which the tool is utilized, meaning that there is no need to switch between two different control devices for controlling the tool when the tool is changed between the machines. Thus an essential drawback of the prior art is alleviated in that there is never any questions of which control device is to control the tool at a certain period of time.

According to one embodiment the control system comprises a first tool information module adapted to store information on the status of the first tool, both when the tool is utilized by the first machine and by the second machine. Thus there is no need for two different tool information modules as in the prior art, which both saves the costs for one control module and alleviates problems with priority between two modules. Information on the status of the first tool is needed in order to ensure a safe and correct operation of the tool. The tool information may comprise information on the wear of the tool or on tool parameters. A tool information module may comprise hardware, software or a combination thereof.

Preferably the first tool information module is adapted to store information on a required rest time for the first tool, and to keep track on the utilization time for the first tool in both the machines. Some tools needs rest time in order to function properly. One example of such a tool is a welding tool, which needs to be cooled after a period of usage.

Preferably the first tool information module is adapted to store information on a service need status for the first tool based on a utilization of the first tool in both machines. Some tools require a service operation performed on the tool in order to function properly. One example is a spot welding tool, the tips of which needs to be dressed in a tip dresser. Another example is a gluing gun, which needs to be refilled with glue.

In one embodiment the control system is adapted to manage a data parameter comprising information on whether the first tool is released or seized by any machine, and to allow seizing of the first tool by a machine if the data parameter comprises information that the tool is released. Thus the risk that two machines try to seize and utilize the same tool at the same time is decreased. Furthermore the risk that a machine tries to seize a tool, which is already in use by another machine, is reduced. Preferably the parameter also comprises information on whether a machine intends to use the tool within a short time period. The parameter may also comprise information on a queuing for using the tool. Preferably the parameter is common for all machines so that all machines have access to knowledge of whether the tool is in use or is free to be seized. Preferably the parameter also comprises information on said rest time, wherein a seizing of the tool is forbidden if the tool needs to rest.

According to one embodiment the industrial production arrangement is adapted to control the first machine to release the first tool in a first tool hold, and the second machine to seize the first tool in the first tool hold. By releasing and seizing the tool in a specific tool hold in a specific place, the industrial production arrangement knows where the tool is, so that a machine easily may seize the tool. Preferably the first tool hold is adapted to perform a service operation on a tool released in the tool hold. Thus the tool may automatically receive service between the changes of tool between the machines. Thus the time for servicing the tool may be reduced, and likewise the cycle time for a production step may be reduced.

According to one embodiment the industrial production arrangement is adapted to control the second machine to release the second tool before seizing the first tool, and the first machine to seize the second tool, after releasing the first tool, wherein the first and the second machines change the first and the second tools with each other. Thus the machines have interchanged their tools, which is advantageous, for example, if the first tool reaches one part of the product while the second tool reaches a second part of the product. By interchanging the tools both parts of the product may be reached for treatment with both tools.

According to one embodiment the second machine is adapted to perform a first type of work process with the first tool, and a second, different type of work process with a second tool. Preferably the first tool is thus shaped to perform the first type of work process and the second tool is adapted to perform of the second type of work process. Thus the machines may not only change tools adapted for performing the same work process, but may actually also change the type of work process that is to be performed. For example a machine may change from between welding the product into gluing the product, or change between any other types of processes. Thus the flexibility of the production arrangement increases substantially.

According to one embodiment the production arrangement comprises at least two production cells arranged in a sequence, wherein each production cell comprises machines simultaneously processing the same product, wherein the first and the second machines are members of the same production cell.

Preferably at least the second machine in the production cell is adapted to perform work operations on a product with both the first and the second tool. Preferably the second machine in the production cell is adapted to perform at least two work processes of different types on the product, with the first and the second tool respectively. Most preferably both the first and the second machines in the production cell are adapted to perform at least two work processes of different types on the product, with a first and a second tool respectively. Thus the two machines may perform two work processes each. Usually the machines are positioned so that one machine reaches one part of the product while the other machine reaches another part of the product. Thus both parts of the product may be treated with both types of work processes by the machines in the production cell, which gives a number of advantages.

A second advantage is that the same production cell may perform two or more processes on the product, meaning that by letting the product remain in the production cell for a longer time and letting the production cell perform two work processes on the product, only one production cell is needed to perform the two work processes. In the prior art, it has been necessary to have two different production cells adapted to perform one work process each, in case that two or more machines have been needed to cover the product. Thus only a reduced number of production cells or a reduced number of robots per cell in the production arrangement are needed, which substantially reduces the costs for investment in machines. This is particularly suitable for production systems in which many work processes needs to be performed on a product, while the needed production rate is not sufficient to support a production line with one production cell for each work process.

A production cell may be defined in a variety of different ways. In one embodiment a production cell is defined as the machines simultaneously processing the same product. In another embodiment the production cell is defined as machines, which are coordinated with each other. In another embodiment the production cell is defined as the machines being controlled by a common control device. In another embodiment the production cell is defined as the machines arranged in such a way that the machines in the production cell reach substantially the entire product. In another embodiment the production cell is defined so that a product being produced remains in each of the production cells during a predetermined cycle time.

According to one embodiment the industrial production system comprises at least a first and a second control device adapted to control the first and the second machine, respectively, wherein the first and the second control devices are adapted to communicate with each other through a network concerning the first tool. Preferably the control devices are adapted to communicate tool information concerning the status of the first tool. By arranging control devices controlling machines in a network it is possible to alleviate at least some of the drawbacks of the prior art.

### BRIEF DESCRIPTION OF THE DRAWINGS

Figs. 1a-d shows an industrial production arrangements in different steps of a method for controlling the production arrangement.
Fig. 2 shows a control device for controlling two machines in an industrial production arrangement.
Fig. 3 shows another example of an industrial production arrangement.

### DETAILED DESCRIPTION OF PREFERRED EMBODIMENTS

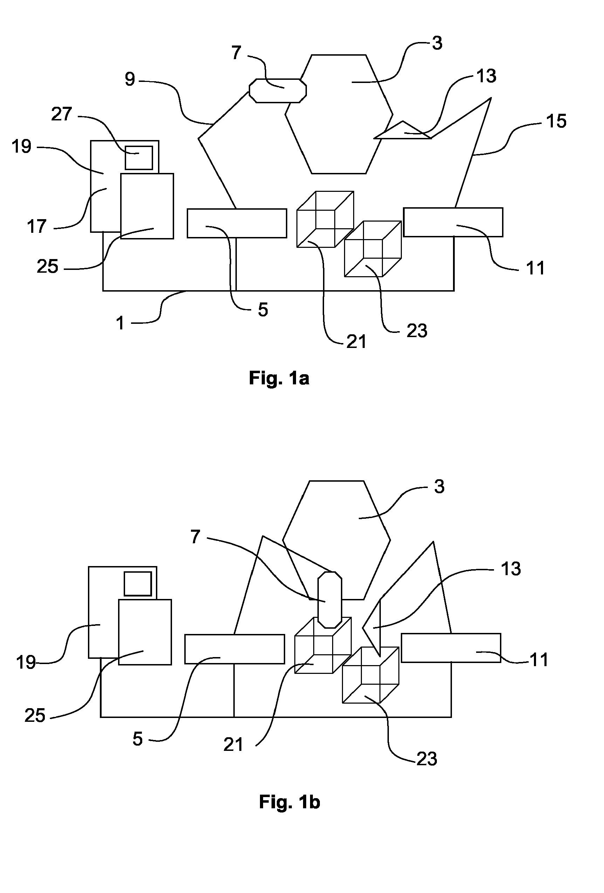

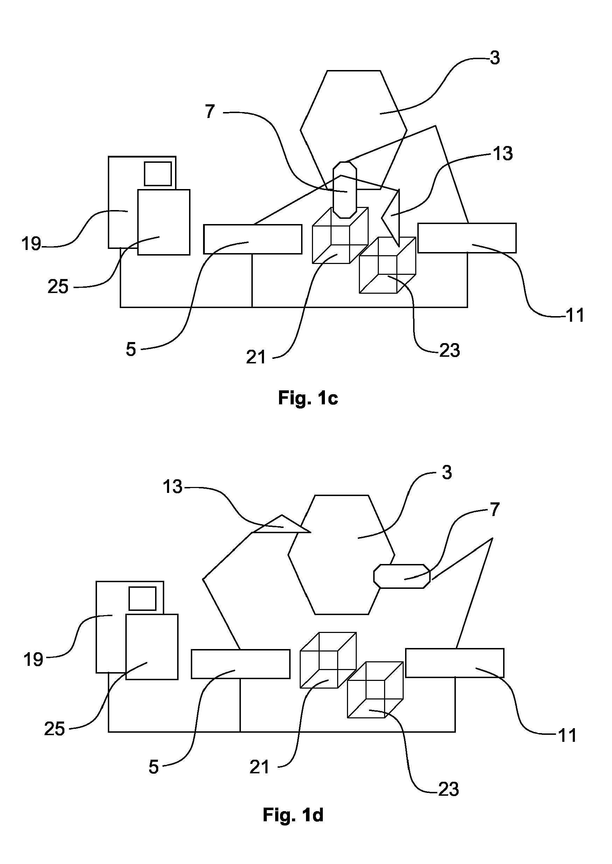

In Fig. 1a-d one example of an industrial production arrangement 1 adapted to perform work operations on a product 3 is shown. The industrial production arrangement 1 comprises a first machine 5 adapted to utilize a tool for performing work operations on the product 3. In fig. 1a the first machine 5 is shown utilizing a first tool 7. The first machine 5 is an industrial robot, wherein the first machine 5 comprises a manipulator 9, which is moveable with six degrees of freedom, and adapted to be connected with and to move the first tool 7. The industrial production arrangement 1 also comprises a second machine 11, which is also adapted to utilize a tool in order to perform work operations on the product 3. In fig. 1a the second machine 11 is shown utilizing a second tool 13. The second machine 11 is also an industrial robot comprising a manipulator 15 moveable with six degrees of freedom, and adapted to be connected with and to move the second tool 13.

The industrial production arrangement 1 also comprises a control system 17 adapted to automatically control and coordinate both the first and the second machines 5, 11, and the movement of the manipulators 9, 15. In this example the control system 17 comprises a control device 19, which comprises control circuits for controlling and coordinating both the machines 5, 11.

The industrial production arrangement 1 also comprises a first tool hold 21 adapted to allow storage of the first tool 7 in the tool hold 21. The industrial production arrangement comprises a second tool hold 23 adapted to allow storage of the second tool 13, in the tool hold 23. The control system 17 is adapted to control the first machine 5 to release the first tool 7 in the first tool hold 21. This is depicted in fig. 1b. Similarly, the control system 17 is adapted to control the second machine 11 to release the second tool 13 in the second tool hold 23. T

The control system 17 is then adapted to control the first machine 5 to seize the second tool 13 from the first tool hold 21.

Similarly the control system 17 is adapted to control the second machine to seize the first tool 7 from the first tool hold 21. This is depicted in fig. 1c. Thus the two machines 5, 11 interchange the first and second tools 7, 13 with each other. The control system 17 is then adapted to control the first and the second machines 5, 11 to utilize the second 13 and the first tools 7, respectively, in order to perform work operations on the product 3. This is depicted in fig. 1d.

Thus the second machine 11 changes its tool from the second tool 13 to the first tool 7, which previously has been utilized by the first machine 5, and utilizes the first tool 7 to process the product 3. The fact that the industrial production arrangement 1 is adapted to allow sharing of tools between the machines in the production arrangement 1 increases the flexibility of the production arrangement. The flexibility increases in such a way that a designer does not necessarily need to decide from the beginning of a design process, which machine is to perform which work operations. Furthermore the machines may perform many different work operations and at different periods of time. Thus it is not necessary to move the tool to a service station separately, but the service is carried out in between the changes of the tools. Thus the cycle time for the production may be decreased.

In this example the first tool 7 is adapted to perform one type of work process and the second tool 13 is adapted to perform another, different type of work process. Hence the industrial production arrangement 1 is adapted to allow the second machine to perform two different types of work processes. Thus the flexibility of the production arrangement increases even more. Furthermore the investment cost may be decreased since it is possible to provide the industrial production arrangement with a smaller number of tools, since the second robot may use both the first and the second tool.

In this example the tool hold 21 is adapted to perform service operations on the first tool 7, when the first tool 7 is placed in the first tool hold 23. In this example, the first tool 7 is a spot-welding tool 7, comprising two electrode tips that are pressed towards a spot on the product, after which a strong current is allowed to pass through the tips to generate heat, which melts the metal of the product at said spot. In order for the welding gun to work properly the tips must sometimes be polished from slag, which is known as tip-dressing. In this example the first tool hold 21 therefore comprises a tip dresser. Similarly the second tool hold 23 is also adapted to perform service operations on the second tool 13, when the tool 13 is placed in the tool hold 23. In this example the second tool hold 23 is adapted to refill the glue in the gluing tool 13.

The industrial production arrangement 1 also comprises a tool control module 25. The tool control module 25 is adapted to control the operation of the first tool 7 both when the first tool 7 is utilized by the first machine 5 and when the first tool 7 is utilized by the second machine 11. Since the control module is adapted to control the first tool 7 regardless of in which machine the tool is used, the control of the tool is simplified, since the risk for confusing control signals to the tool 7 from two different control modules is decreased. In this example the tool control module 25 is also adapted to control the operation of the second tool 13 both when the second tool 13 is utilized by the first and the second machines. In another example the industrial production arrangement may instead comprise two tool control modules adapted to control each tool separately. In this example the tool control module 25 is a process cabinet for the tool.

In this example the tool control module 25 also comprises a tool information module 27. The tool information module is adapted to store information on the status of the tool 7, both when the tool 7 is utilized by the first machine and when the tool is utilized by the second machine. Thus it is easier to keep track on the status of the tool, in difference from the prior art, in which one status module was needed for each machine using the tool.

The tool information module is also adapted to store information on a required rest time for the first tool 7 and to keep track on the utilization time for the first tool in both the machines. In this example, since the first tool 7 is a spot welding tool, the rest time is needed to cool the tool between weldings.

The tool information module 27 is further adapted to store information on a service need status for the first tool based on the utilization of the first tool 7 in both the machines. In this example the tool information module is adapted to store information on when the spot-welding tool needs to be tip-dressed. In this example the tool information module is also adapted to store status information on the second tool. The tool information module 27 is therefore adapted to store information on when it is time to refill the second tool with glue.

In the embodiment shown only two tools are used, but the industrial production arrangement 1 may comprise any number of tools adapted for use with a first and/or second machines. In this case it is not necessary that the second machine 11 seizes the first tool directly after the first machine has released the first tool 7, but the second machine may instead seize one or more other tools in between of the first machine releasing the first tool and the second machine seizing the first tool 7. In this example the first tool is a spot welding tool and the second tool 13 is a gluing gun. These types of tools are readily changeable between the machines, since they can easily be released and seized by the robots.

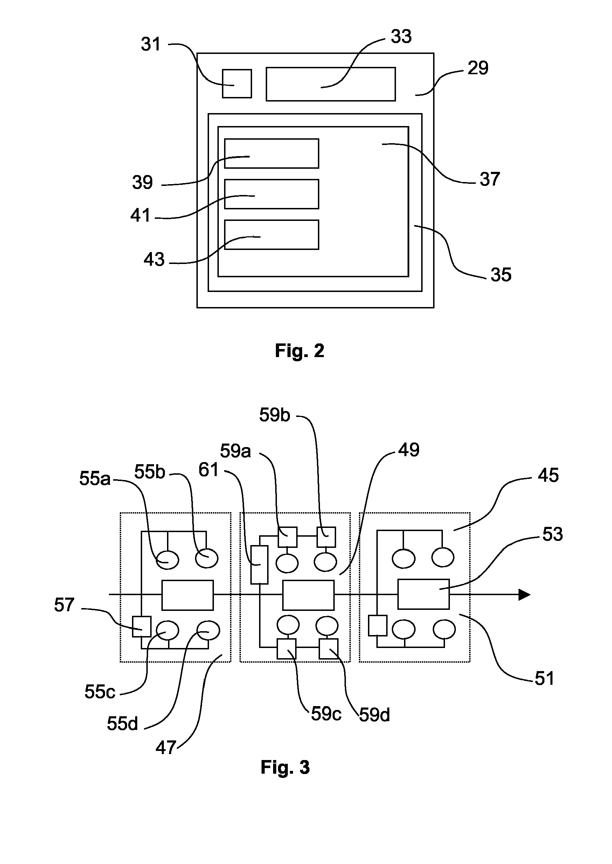

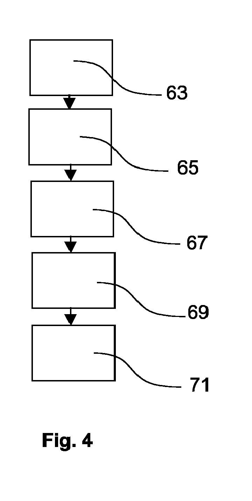

In Fig. 2 another example of a control device for controlling a first and a second machine is shown. The control device 29 comprises a processor 31, an internal memory 33 and a computer readable medium 35. The computer readable medium 35 comprises a computer program 37 written thereon, which computer program 37 is directly downloadable into the internal memory 33 of the control device 29. The processor 31 is adapted to run the computer program 37, and the computer program 37 is adapted to induce the control device 29 to control the machines in accordance to program instructions in the program 37.

In this example the computer program, and thus the control device 29, are adapted to control a first machine to utilize a first tool for performing work operations on a product, and then to release the first tool. The computer program 37 and the control device 29 are further adapted to control a second machine to seize the first tool and to utilize the first tool for carrying out work operations on the same product.

The computer program 37 comprises a tool control module 39 adapted for controlling the tool, both when the tool is utilized by the first and by the second machine. The computer program 37 also comprises a tool information module 41 adapted to store information on the status of the tool, both when the tool is utilized by the first and by the second machine. The tool control module 39 and the tool information module 41 have similar functions as the tool control module 25 and tool information module 27 as previously described with reference to fig. 1a-d.

The computer program 37 also comprises a data parameter 43 comprising information on whether the first tool is released or seized by any of the machines. The control device 29 is in turn adapted to allow seizing of the first tool by a machine if the data parameter comprises information that the tool is released. In this way it is ensured that a machine does not try to seize the tool when it is used by another machine. In this example the computer program 37 and the control device 29 are designed so that when the time for a machine to seize the first tool draws near the data parameter 43 is adjusted to comprise information that the machine is about to seize the tool, wherein it is ensured that no other machine seizes the tool, but may be controlled to seize other tools instead. In this example the data parameter 43 comprises queuing information for managing a queue for the tool. The machines are given priority in the queue depending on the design of the production scheme. Furthermore the control device 29 is adapted to control the machine so that a tool is not seized if the status information reveals that the tool needs to rest or needs to be serviced.

In Fig. 3 an industrial production arrangement 45 is shown. The industrial production arrangement 45 comprises a first production cell 47, a second production cell 49 and a third production cell 51 arranged in a sequence after each other. Thus a product 53 first enters the first production cell 47, after which the product 53 proceeds into the second 49 and third production cells 51, this is illustrated by the arrow in Fig. 3.

In this example, each production cell 47, 49, 51 comprise four machines for processing the product. In this example the machines in each cells simultaneously processes the same product 53. The machines are arranged to reach one fourth of the product each. Hence all machines need to perform a specific work process if the entire product is to be treated with that process. In this example the first and the second machines 55a, 55b are arranged to share tools with each other, in that the first machine 55a is adapted to utilize a first tool while the second machine is adapted to utilize the second tool, after which the machines interchange the tools as described in relation to Fig. 1 and 2.

The first machine 55a is therefore adapted to first utilize the first tool for performing one type of work process, and then to utilize the second tool for performing another type of work process. Similarly, the second machine 55a is adapted to first utilize the second tool for performing one type of work process, and then to utilize the first tool for performing another type of work process.

Thus both the first and the second machine 55a, 55b are adapted to perform two types of work processes on the product, with the first and the second tool respectively.

Since the machines in the first production cell 47 are adapted to perform two types of work processes the number of machines can be decreased by half, by eliminating one production cell. Previously one machine was only capable of performing one type of work process, meaning that in order to perform two work processes two separate production cells were needed. According to the invention only one production cell 47 is needed. Thus the investment cost for the production line may be substantially decreased since the number of machines and also the number of tools may be decreased for the production line.

The time that the product 53 remains in the production cell is increased, since two work processes need to be carried out. However, due to the fact that the service of the tools may be performed during the change of the tool, the time the product remains in the production cell is decreased in this respect. An important aspect is that the cycle time is substantially similar for all cells. This application is suitable for production processes in which the optimum economic performance is obtained by decreased investment and increased cycle time for the product.

In this example the first production cell 47 comprises machines, which are coordinated with each other. Furthermore the first production cell comprises a control device 57 adapted to control the machines 55a, 55b, 55c, 55d in the production cell 47. Furthermore the production cell 47 comprises machines 55a, 55b, 55,c, 55d arranged so that substantially the entire product can be reached by the machines in the production cell. The industrial production arrangement 45 is further designed so that the product 53 being produced remains in each production cells 47, 49, 51 during no more than a predetermined cycle time.

The second production cell 49 however comprises four control devices 59a-b, adapted to control one machine each. The four control devices 59a-b are adapted to communicate with each other through a network 60. In this example the first control device 59a is adapted to function as a master, and the other control devices are adapted to function as slaves to the master 59a. The control devices 59a-b are adapted to communicate with each other concerning tool information on the status of the tools used in the production cell 49. Similarly the production cell 49 comprises are plurality of tool control modules 61, each adapted to control the operation of one tool, and to communicate with the control device 59a-b that controls the machine seizing that specific tool.

The invention is now to be described as a method for controlling two machines in an industrial production arrangement according to one example of the invention, and with reference to Fig. 1a-b.

In a first step 63 of the invention, the method comprises automatically controlling and coordinating both a first and a second machine, by controlling the first machine to utilize a first tool, and controlling the second machine to utilize a second tool. The method further comprises controlling the operation of the first tool with a first tool control module, and controlling the operation of the second tool with a second tool control module.

In a second step 65 the method comprises controlling the first machine to release the first tool in a first tool hold, and controlling the second machine to release the second tool in a second tool hold.

In a third step 67 the method comprises performing a service operation on the first tool in the first tool hold. The method also comprises performing a service operation on the second tool in the second tool hold.

In a fourth step 69, the method comprises managing a data parameter comprising information on whether the first tool is released or seized by any of the machines. In this case, since the first and second tools have been released in the third step, the data parameter comprises information that the first and second tools are released. The method further comprises allowing seizing of the first tool based on the information in the data parameter since the tools are released, and controlling the first machine to seize the second tool from the second tool hold, and controlling the second machine to seize the first tool in the first tool hold.

In a fifth step 71, the method comprises controlling the first machine to utilize the second tool, and controlling the second machine to utilize the first tool. The method also comprises controlling the operation of the first tool with a first tool control module, and controlling the operation of the second tool with a second tool control module. Thus the first and second tools are controlled by the first and second tool control modules, respectively, both when the tools are utilized by the first and the second machines. In this example the tools are adapted to perform different types of work processes. Thus the method comprises performing a first type of work process with the first tool, and a second, different type of work process with the second tool, with the same machine.

Throughout the performance of the method steps above, the method also comprises storing information on the status of the first tool in a first tool information module. Thus the information is stored in the same module, both when the first tool is utilized by the first machine, and when the first tool is utilized by the second machine. The method further comprises storing information on a required rest time for the first tool, and keeping track of the utilization time for the first tool in both the machines. The method further comprises storing information on a service need status for the first tool based on the utilization of the first tool in both the machines. Similarly information is stored concerning the second tool.

The invention is not limited to the embodiments described but may be varied within the framework of the following claims.

For example, any number of tools and/or machines can be used in accordance with the invention. Features described in one of the examples above are not limited to that particular example, but may be used in combination with features in another example. A machine may be any type of machine using a tool, which can be changed automatically.

## Claims

1. An industrial production arrangement comprising at least a first machine (5) adapted to utilize a first tool (7), and a second machine (11) also adapted to utilize a tool, each machine being adapted to be automatically controlled by a control system (17), wherein the first machine (5) is adapted to release the first tool (7), and the second machine (11) is adapted to seize the first tool (7) and to utilize the first tool (7), **characterized in that** the control system (17) is adapted to control both the first (5) and the second (11) machines and to coordinate the machines (5, 11).

2. An industrial production arrangement according to claim 1, **characterized in that** the control system comprises a first control device (19) adapted to control both the first and the second machines.

3. An industrial production arrangement according to claim 1, **characterized in that** the control system comprises a first tool control module (25, 35) adapted to control the operation of the first tool (7) both when the first tool is utilized by the first machine and when the first tool is utilized by the second machine.

4. An industrial production arrangement according to claim 1, **characterized in that** the control system comprises a first tool information module (27, 41) adapted to store information on the status of the first tool, both when the tool is utilized by the first machine and when the tool is utilized by the second machine.

5. An industrial production arrangement according to claim 4, **characterized in that** the first tool information module (27, 41) is adapted to store information on a required rest time for the first tool, and to keep track on the utilization time for the first tool in both the machines.

6. An industrial production arrangement according to claim 4, **characterized in that** the first tool information module (27, 41 ) is adapted to store information on a service need status for the first tool based on the utilization of the first tool in both the machines.

7. An industrial production arrangement according to claim 1, **characterized in that** the control system is adapted to manage a data parameter (43) comprising information on whether the first tool is released or seized by any of the machines, and to allow seizing of the first tool by a machine if the data parameter comprises information that the tool is released.

8. An industrial production arrangement according to claim 1, **characterized in that** the industrial production arrangement comprises a first tool hold (21) adapted for holding the first tool, and that the control system is adapted to control the first machine (5) to release the first tool in the first tool hold, and the second machine to seize the first tool in the first tool hold.

9. An industrial production arrangement according to claim 8, **characterized in that** the first tool hold (21) is adapted to perform a service operation on the first tool (7).

10. An industrial production arrangement according to claim 1, **characterized in that** the second machine (11) is adapted to utilize a second tool (13), and that the industrial production system is adapted to control the second machine to release the second tool (13), and the first machine to seize the second tool, wherein the first and the second machines interchanges the first and the second tools with each other.

11. An industrial production arrangement according to claim 1, **characterized in that** the second machine (11) is adapted to perform a first type of work process with the first tool (7), and to perform a second, different type of work process with a second tool (13).

12. An industrial production arrangement according to any of the previous claims, **characterized in that** the production arrangement comprises at least two production cells (47, 49, 51) arranged in a sequence, wherein each production cell comprises machines simultaneously processing the same product, wherein the first and the second machines are members of the same production cell.

13. An industrial production arrangement according to claim 12, **characterized in that** the second machine (55b) in the production cell (47) is adapted to perform work operations on a product with both the first tool and a second tool.

14. An industrial production arrangement according to claim 13, **characterized in that** the second machine (55b) in the production cell (47) is adapted to perform at least two work processes of different types on the product, with the first and the second tool respectively.

15. An industrial production arrangement according to claim 14, **characterized in that** both the first (55a) and the second (55b) machines in the production cell (47) are adapted to perform at least two work processes of different types on the product, with the first and the second tool respectively.

16. An industrial production arrangement according to any of the previous claims, **characterized in that** the industrial production arrangement comprises at least a first (59a) and a second (59b) control device, adapted to control the first and the second machine, respectively, wherein the first and the second control devices are adapted to communicate with each other in a network (60).

17. An industrial production arrangement according to any of the previous claims, **characterized in that** at least the second machine (11) comprises a mechanical member (15) adapted to be movable with at least three degrees of freedom.

18. An industrial production arrangement according to any of the previous claims, **characterized in that** at least the second machine (11) is an industrial robot comprising a manipulator (15).

19. A control device **characterized in that** the control device (19, 29) is adapted to automatically control and coordinate both a first and a second machine, wherein the control device is adapted to control the first machine to utilize a first tool, and to release the first tool, and to control the second machine to seize the first tool and to utilize the first tool.

20. A method for controlling two machines in an industrial production arrangement, **characterized in that** the method comprises
- automatically controlling and coordinating both a first and a second machine, wherein the method comprises
- controlling the first machine to utilize a first tool,
- controlling the first machine to release the first tool,
- controlling the second machine to seize the first tool, and
- controlling the second machine to utilize the first tool.

21. A computer program directly downloadable into the internal memory of a control device, **characterized in that** the computer program (37) is adapted to induce the control device to perform the steps in claim 20.

22. A computer readable medium comprising a computer program written thereon, which computer program is loadable into the internal memory of a control device, **characterized in that** the computer program (37) is adapted to induce the control device to perform the steps in claim 20.
